# EUROPEAN PATENT APPLICATION

(11) **EP 3 451 524 A1**
(43) Date of publication of application: **06.03.2019**
(21) Application number: 18191007.6
(22) Date of filing: 27.08.2018
(51) Int. Cl.: H02P 8/02, G04C 3/14, H02P 8/16, H02P 8/26

(54) **ROTATION CONTROL APPARATUS, ELECTRONIC TIMEPIECE, AND ROTATION CONTROL METHOD**

(30) Priority: 30.08.2017 JP 2017165524
(71) Applicant: Casio Computer Co., Ltd., Tokyo 151-8543 (JP)
(72) Inventor: SAITO, Yuta, Tokyo, 205-8555 (JP)
(74) Representative: Plougmann Vingtoft a/s

(57) **Abstract**

A rotation control apparatus for a stepping motor includes a motor control unit including a function of supplying to a coil a first pulse for rotating a rotor, a function of supplying to the coil a second pulse that is shorter than the first pulse and has the opposite polarity from the first pulse, and a function of supplying to the coil a third pulse that is shorter than the first pulse and has the same polarity as the first pulse; and a determination unit that determines whether or not the rotor has been rotated by the first pulse on the basis of a current that flows in the coil in response to the third pulse.

## Description

### BACKGROUND OF THE INVENTION

The present invention relates to a rotation control apparatus, an electronic timepiece, and a rotation control method.

A technique is known for detecting rotation in a stepping motor having a coil in the stator and a magnet in the rotor, where the rotation is detected using a magnetic saturation phenomenon arising in the core of the stator. That is, if a magnetic flux produced by the magnet and a magnetic flux produced by the coil are in a mutually-strengthening relationship, magnetic saturation of the core will have an increased effect, and the inductance of the coil will drop. On the other hand, if the magnetic flux produced by the magnet and the magnetic flux produced by the coil are in a mutually-weakening relationship, the magnetic saturation will have a reduced effect, and the inductance of the coil will rise. Japanese Examined Patent Application Publication No. S61-15380 discloses a technique for determining whether rotation has succeeded or failed by applying a detection pulse to the coil and measuring the waveform of current flowing in the coil.

However, when detecting rotation using the magnetic saturation phenomenon, depending on the state of the stepping motor, it may be difficult to accurately detect rotation.

### SUMMARY OF THE INVENTION

Accordingly, the present invention is directed to a scheme that substantially obviates one or more of the problems due to limitations and disadvantages of the related art.

The present disclosure discloses a rotation control apparatus, an electronic timepiece, and a rotation control method.

Additional or separate features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, in one aspect, the present disclosure provides a rotation control apparatus that controls rotation of a rotor of a motor, the motor including the rotor that includes a magnet and a stator that includes a coil for rotating the rotor, the rotation control apparatus including: a motor control unit including a function of supplying to the coil a first pulse for rotating the rotor, a function of supplying to the coil a second pulse that is shorter than the first pulse and that has an opposite polarity from the first pulse, and a function of supplying to the coil a third pulse that is shorter than the first pulse and that has the same polarity as the first pulse; and a determination unit that determines whether or not the rotor has rotated by the first pulse on the basis of a current flowing in the coil in accordance with the third pulse.

In another aspect, the present disclosure provides a rotation control apparatus for a stepping motor, including: a motor control unit that causes a first pulse for rotating a rotor of the stepping motor to be supplied to the stepping motor; the motor control unit subsequently causing a second pulse that is shorter than the first pulse and that has an opposite polarity from the first pulse to be supplied to the stepping motor so as to stabilize the rotor, and thereafter causing a third pulse that is shorter than the first pulse and that has the same polarity as the first pulse to be supplied to the stepping motor so as to induce a current in the stepping motor for detecting whether or not the rotor has successfully rotated to a target position; and a determination unit that receives a signal representing the current induced in the stepping motor so as to determine whether or not the rotor has successfully rotated to the target position.

In another aspect, the present disclosure provides a rotation control apparatus for a stepping motor having a coil to rotate a rotor, including: a motor control unit causing a first pulse for rotating the rotor of the stepping motor to be supplied to the coil of the stepping motor, the motor control unit subsequently causing a second pulse that has an opposite polarity from the first pulse to be supplied to the coil so as to stop the rotor at a stable position where the rotor is magnetically stable, and thereafter causing a third pulse that is shorter than the first pulse and has the same polarity as the first pulse to be supplied to the coil; and a determination unit that determines whether or not the rotor has been rotated by the first pulse on the basis of a current that flows in the coil in response to the third pulse supplied.

In another aspect, the present disclosure provides a rotation control method, used in a stepping motor that includes a rotor having a magnet and a stator having a coil for rotating the rotor, of controlling rotation of the rotor, the method including: supplying to the coil a first pulse for rotating the rotor; thereafter, supplying to the coil a second pulse that is shorter than the first pulse and that has an opposite polarity from the first pulse; thereafter, supplying to the coil a third pulse that is shorter than the first pulse and has the same polarity as the first pulse; and determining whether or not the rotor has been rotated by the first pulse to a target position on the basis of a current that flows in the coil in response to the third pulse.

It is to be understood that both the foregoing general description and the following detailed description are exemplary and explanatory, and are intended to provide further explanation of the invention as claimed.

### BRIEF DESCRIPTION OF THE DRAWINGS

FIG. 1 is a block diagram illustrating an overview of an electronic timepiece according to Embodiment 1 of the present invention.
FIG. 2 is a block diagram illustrating an overview of a microcomputer according to Embodiment 1.
FIG. 3 is a plan view of a stepping motor according to Embodiment 1.
FIG. 4 is a circuit diagram illustrating a driving circuit according to Embodiment 1.
FIG. 5A is a descriptive diagram illustrating operations of the driving circuit in a driving phase according to Embodiment 1.
FIG. 5B is a descriptive diagram illustrating operations of the driving circuit in a stabilizing phase according to Embodiment 1.
FIG. 5C is a descriptive diagram illustrating operations of the driving circuit in a charge phase according to Embodiment 1.
FIG. 5D is a descriptive diagram illustrating operations of the driving circuit in a current detection phase according to Embodiment 1.
FIGs. 6A and 6B are waveform diagrams illustrating coil voltage (FIG. 6A) and coil current (FIG. 6B) when rotation succeeds according to Embodiment 1. FIG. 7A is a descriptive diagram illustrating operations when rotation succeeds according to Embodiment 1.
FIG. 7B is a descriptive diagram illustrating operations when rotation fails (stable position) according to Embodiment 1.
FIG. 7C is a descriptive diagram illustrating operations when rotation fails (unstable position) according to Embodiment 1.
FIGs. 8A and 8B are waveform diagrams illustrating coil voltage (FIG. 8A) and coil current (FIG. 8B) when rotation fails according to Embodiment 1.
FIG. 9 is a graph illustrating torque characteristics of the stepping motor according to Embodiment 1.
FIG. 10 is a plan view of a stepping motor according to Embodiment 2.
FIG. 11 is a circuit diagram illustrating a driving circuit according to Embodiment 2.
FIG. 12A is a descriptive diagram illustrating operations of the driving circuit in a first driving phase according to Embodiment 2.
FIG. 12B is a descriptive diagram illustrating operations of the driving circuit in a second driving phase/charge phase according to Embodiment 2.
FIG. 12C is a descriptive diagram illustrating operations of the driving circuit in a stabilizing phase according to Embodiment 2.
FIG. 12D is a descriptive diagram illustrating operations of the driving circuit in a current detection phase according to Embodiment 2.
FIG. 13 is a plan view of a stepping motor according to Embodiment 3.
FIG. 14 is a circuit diagram illustrating a driving circuit according to Embodiment 3.
FIG. 15 is a diagram illustrating operations according to Embodiment 3.
FIG. 16 is a graph illustrating torque characteristics of the stepping motor according to Embodiment 3.

### DETAILED DESCRIPTION OF EMBODIMENTS

### <Embodiment 1>

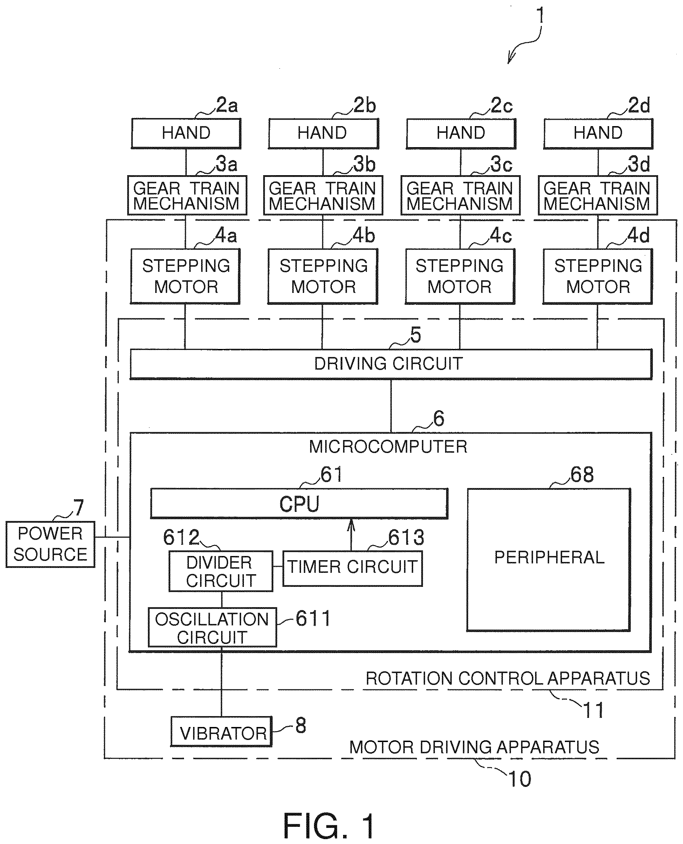

FIG. 1 is a block diagram illustrating an overview of an electronic timepiece 1 according to Embodiment 1.

The analog electronic timepiece 1 according to the present embodiment is capable of driving four hands 2a to 2d using independent motors. The electronic timepiece 1 is a wristwatch-type electronic timepiece including a band for securing the timepiece to an arm, for example, but is not limited to this in particular. The electronic timepiece 1 includes, for example, the hands 2a to 2d, and stepping motors 4a to 4d that rotationally drive the corresponding hands 2a to 2d via corresponding gear train mechanisms 3a to 3d. The electronic timepiece 1 further includes a driving circuit 5 that drives the stepping motors 4a to 4d, a microcomputer 6, a power source 7, and a vibrator 8.

The hands 2a to 2d will simply be referred to as hands 2 when no particular distinction needs to be made among them, and the gear train mechanisms 3a to 3d will simply be referred to as gear train mechanisms 3 when no particular distinction needs to be made among them. Likewise, the stepping motors 4a to 4d will simply be referred to as stepping motors 4 when no particular distinction needs to be made among them.

A part including the stepping motors 4, the driving circuit 5, the microcomputer 6, and the vibrator 8 will be called a "motor driving apparatus 10". Additionally, because the microcomputer 6 and the driving circuit 5 have a function for controlling the rotation of the stepping motors 4, the driving circuit 5 and the microcomputer 6 will be called a "rotation control apparatus 11".

The driving circuit 5 has a bridge circuit that drives the stepping motors 4, and applies voltages to the stepping motors 4 in response to commands from the microcomputer 6. The microcomputer 6 is a large-scale integration (LSI) chip, and includes a central processing unit (CPU) 61, a peripheral 68, an oscillation circuit 611, a divider circuit 612, and a timing circuit 613 (a timing unit).

The hands 2a to 2d are provided so as to be capable of rotating around a rotation axis on a face plate. The gear train mechanisms 3a to 3d cause the corresponding hands 2a to 2d to rotate. At appropriate timings, the driving circuit 5 outputs driving voltage signals for driving the stepping motors 4a to 4d on the basis of control signals inputted from the microcomputer 6. The driving circuit 5 can adjust and output the driving voltages and driving voltage pulse widths of the stepping motors 4 on the basis of setting signals from the microcomputer 6. The driving circuit 5 outputs driving signals to the stepping motors 4.

The CPU 61 controls the overall operations of the electronic timepiece 1 by carrying out various types of computational processes. The CPU 61 reads out and executes control programs to cause the units to continuously carry out operations related to displaying the time. The CPU 61 also causes the units to carry out operations in real time or at set timings on the basis of operational inputs made to an operation unit (not illustrated). The CPU 61 is a control unit that sets target positions to which the hands 2 are to move and controls the driving of the stepping motors 4 through the driving circuit 5.

The oscillation circuit 611 generates a unique frequency signal and outputs the signal to the divider circuit 612. A circuit that oscillates when combined with the vibrator 8, which is a crystal or the like, is used as the oscillation circuit 611, for example. The divider circuit 612 divides the signal inputted from the oscillation circuit 611 into various frequency signals used by the CPU 61, the timing circuit 613, and so on, and outputs the resulting signals. The timing circuit 613 is a counter circuit that counts the number of a prescribed frequency signal inputted from the divider circuit 612 and adds the obtained number to an initial time so as to measure the current time. The current time measured by the timing circuit 613 is read out by the CPU 61 and used to display the time. This time measurement may be controlled by software. The power source 7 is configured to be capable of continuously and stably operating the electronic timepiece 1 for long periods of time, and is a combination of a battery and a DC-DC converter, for example. This ensures that an output voltage of the power source 7 stays at a prescribed value during operation.

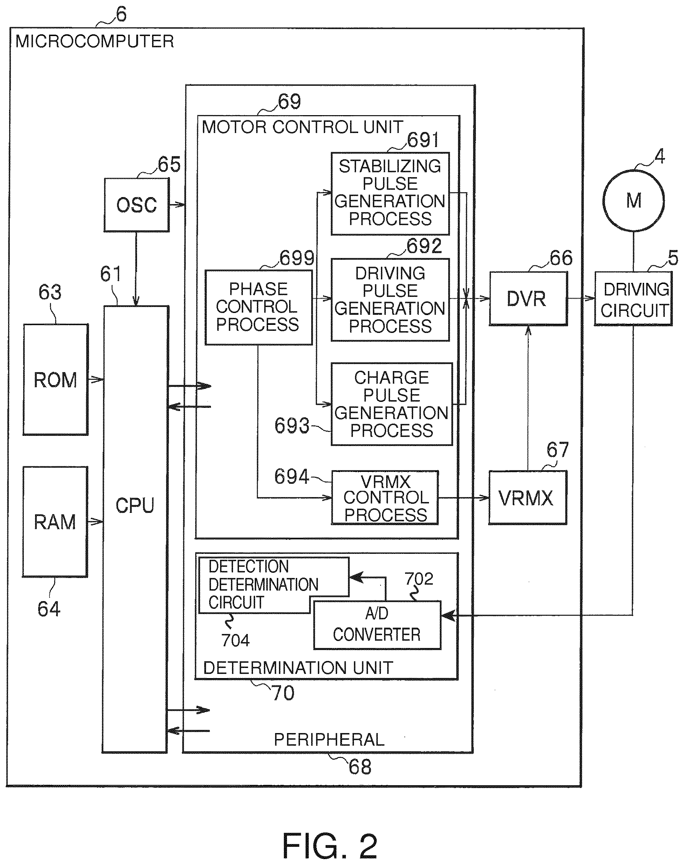

FIG. 2 is a block diagram illustrating an overview of the microcomputer 6, which is an LSI chip. The microcomputer 6 includes the CPU 61, read-only memory (ROM) 63, random access memory (RAM) 64, an oscillator (OSC) 65, the peripheral 68, a VRMX 67, and a DVR 66. The ROM 63 stores various control programs, default setting data, and so on. The various control programs (not illustrated) are read out and continuously executed by the CPU 61 when the electronic timepiece 1 is started.

The RAM 64 is volatile memory such as SRAM or DRAM, and provides a working memory space for the CPU 61. Additionally, user setting data and the like, set on the basis of operational inputs made to the operation unit, can also be temporarily stored in the RAM 64. Part of the RAM 64 may be non-volatile memory such as flash memory or Electrically Erasable and Programmable Read-Only Memory (EEPROM). The OSC 65 generates a unique frequency signal and supplies the signal to the CPU 61, the peripheral 68, and so on, and corresponds to a combination of the oscillation circuit 611 and the vibrator 8 illustrated in FIG. 1.

The DVR 66 is a circuit that drives signals for driving the motor. The VRMX 67 is a regulator that generates power to supply to the DVR 66. The peripheral 68 includes a motor control unit 69 and a determination unit 70. The motor control unit 69 includes a phase control circuit (process) 699, a stabilizing pulse generation circuit (process) 691, a driving pulse generation circuit (process) 692, a charge pulse generation circuit (process) 693, and a VRMX control circuit (process) 694.

The determination unit 70 includes an A/D converter 702 and a detection/determination circuit 704. Note that the phase control circuit 699, the stabilizing pulse generation circuit 691, the driving pulse generation circuit 692, the charge pulse generation circuit 693, the VRMX control circuit 694, the A/D converter 702, and the detection/determination circuit 704 may be a motor control unit within a single microcomputer, or may be provided as individual motor control units and operated by a single microcomputer or a plurality of microcomputers.

Here, the "stabilizing pulse" is a pulse that generates torque in a rotor 48 in the direction opposite from the driving pulse.

The phase control circuit 699 controls a series of phases including the output of driving pulses, the output of stabilizing pulses, and the generation of charge pulses. These pulses will be described in detail later. The stabilizing pulse generation circuit 691 outputs the stabilizing pulses to the stepping motors 4; the driving pulse generation circuit 692 outputs the driving pulses to the stepping motors 4; and the charge pulse generation circuit 693 outputs the charge pulses to the stepping motors 4. The VRMX control circuit 694 controls the VRMX 67 to generate a prescribed source voltage. The A/D converter 702 converts a prescribed analog voltage (described in detail later) of the driving circuit 5 into a digital signal. The detection/determination circuit 704 determines whether or not the stepping motors 4 have rotated on the basis of the digital signal.

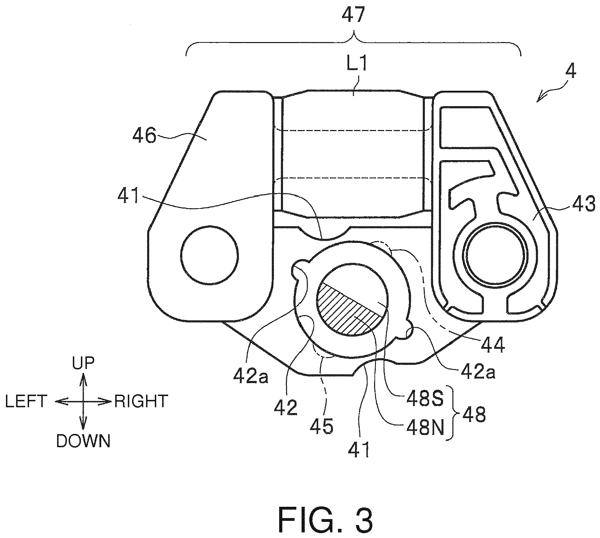

FIG. 3 is a plan view of the stepping motor 4, which has a single-core configuration.

The stepping motor 4 includes a stator 47 and the rotor 48. The rotor 48 is formed having a disk shape and is supported so as to be capable of rotating in a rotation direction, and includes a magnet bipolarized in a radial direction. In the rotor 48 illustrated in FIG. 3, the unhatched part corresponds to an S pole 48S, and the hatched part corresponds to an N pole 48N. A magnet such as a rare earth magnet (a samarium cobalt magnet, for example) can be used favorably as the rotor 48, but the rotor 48 is not limited thereto.

The rotor 48 is disposed so as to be capable of rotating about a shaft (not illustrated) provided in the stator 47. Note that in the present embodiment, the rotor 48 can rotate counter-clockwise or clockwise at a prescribed step angle in response to a driving pulse being applied to a coil L1, which will be described later. When the stepping motor 4 is applied in a timepiece or the like, the rotor 48 is preferably linked to gears constituting the corresponding gear train mechanism 3 for moving the corresponding hand 2 of the timepiece, for example. The rotation of the rotor 48 then causes those gears and the like to rotate.

The stator 47 includes a core 46 formed having a substantially quadrangular frame shape, and the coil L1, which is wound around an upper side area of the core 46. A substantially circular opening 42 is formed in a central area of a lower side of the core 46, and the rotor 48 is disposed concentric to the opening 42. When current flows in the coil L1, magnetic poles arise in the stator 47 near regions 44 and 45. The polarities of the magnetic poles in the regions 44 and 45 are determined by the orientation of the current flowing in the coil L1. The coil L1 is connected to the driving circuit 5 (see FIG. 1) via a terminal block 43.

Thus the rotor 48 rotates when the coil L1 is driven such that magnetic poles repelling the S pole 48S and the N pole 48N arise in the regions 44 and 45. Two recesses 42a are formed in the stator 47, in an inner circumferential surface of the opening 42, which accommodates the rotor 48. When the upward direction is assumed to be 0 degrees, the two recesses 42a are formed at approximately 60 degrees and approximately 240 degrees, respectively. The rotor 48 can be kept in a static state by these two recesses 42a.

In the present embodiment, the stepping motor 4 has the highest index torque (holding torque) in a state where the S pole 48S and the N pole 48N are facing the regions 44 and 45. As such, in a de-energized state, that is, when no current is flowing in the coil L1, the rotor 48 magnetically stabilizes and stops at the stopped position illustrated in FIG. 3 or a stopped position rotated 180 degrees from that stopped position. These stopped positions will be called "stable positions". Substantially arc-shaped recesses 41 are formed in the core 46, in parts to the upper-left and the lower-right of the rotor 48. The positions where the recesses 41 are formed are positions where the cross-section area of the core 46 is the smallest (or where a minimum value appears for the cross-sectional area), and are positions where magnetic saturation arises with ease.

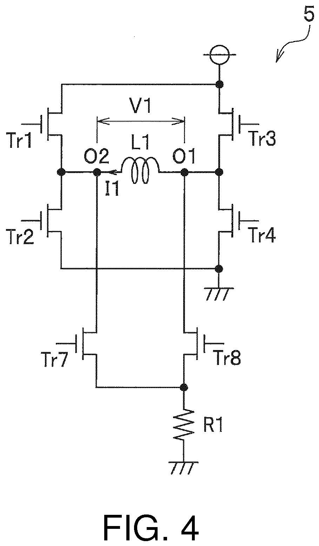

FIG. 4 is a circuit diagram illustrating the driving circuit 5.

The driving circuit 5 applies the driving pulses, stabilizing pulses, and charge pulses to the coil L1 of the stepping motor 4. The driving circuit 5 includes an H-bridge circuit constituted by switch elements Tr1 to Tr4, and the switch elements Tr1 to Tr4 are Metal-Oxide-Semiconductor Field-Effect Transistors (MOSFETs), for example. Switch elements Tr7 and Tr8 and a resistor R1 constitute a discharge circuit that discharges energy stored in the coil L1. A terminal voltage of the coil L1 will be called a coil voltage VI, and current flowing in the coil L1 will be called coil current I1.

The power source 7 (see FIG. 1) applies a source voltage Vcc across a source terminal and a ground terminal of the driving circuit 5. Between a voltage terminal and the ground terminal, the switch elements Tr1 and Tr2 are connected in series via a connection point O2, and the switch elements Tr3 and Tr4 are connected in series via a connection point O1. One end of the resistor R1 is connected to the ground terminal. The switch element Tr7 is connected between the connection point O2 and the other end of the resistor R1. The switch element Tr8 is connected between the connection point O1 and the other end of the resistor R1. The coil L1 is connected between the connection points O2 and O1.

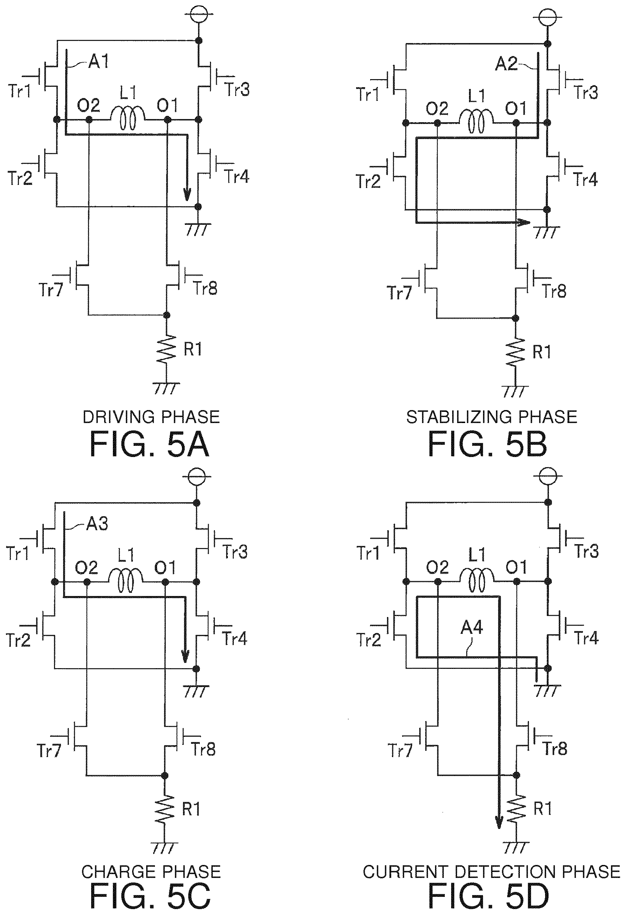

Next, operations according to the present embodiment will be described with reference to FIGs 5A to 5D. FIG. 5A is a descriptive diagram illustrating operations of the driving circuit 5 in a driving phase; FIG. 5B, in a stabilizing phase; FIG. 5C, in a charge phase; and FIG. 5D, in a current detection phase. The stepping motor 4 is capable of rotating at a step angle of 180 degrees. FIGs. 5A to 5D illustrate current flowing in the driving circuit 5 in a period in which the rotor 48 rotates 180 degrees from a given step angle to the next step angle.

In the driving phase illustrated in FIG. 5A, the driving pulse generation circuit 692 (see FIG. 2) turns the switch elements Tr1 and Tr4 on and turns the other switch elements off. As a result, current flows to the coil L1 along a path A1 traversing the switch elements Tr1 and Tr4. In a normal state, the rotor 48 is rotationally driven 180 degrees. The voltage applied to the coil L1 in the driving phase will be called a "driving pulse", and the state in which the rotor 48 has been driven 180 degrees by the driving pulse will be called "successful rotation". As described above, the stopped position of the rotor 48 indicated in FIG. 3 and a stopped position rotated 180 degrees from that stopped position are stable positions where the rotor 48 is stopped in a magnetically stable state. Thus as long as "successful rotation" continues, the rotor 48 will stop at the two stable positions in an alternating manner.

However, in the case where the electronic timepiece 1 is subjected to vibrations or impacts when the driving pulse is inputted, there are situations where the rotor 48 does not rotate 180 degrees despite the driving pulse being inputted. This state is called "rotation failure". When rotation fails, the rotor 48 returns to the original stable position in most cases.

However, there are situations where the rotor stops at a position that is not a stable position (called an unstable position hereinafter) when rotation fails, due to various factors such as ambient temperature, ambient humidity, and age-related changes in the gear train mechanism 3 that is driven by the stepping motor 4. In the stepping motor 4 according to the present embodiment, two positions rotated 90 degrees from corresponding ones of the stable positions are representative examples of the unstable positions. This is because at these positions, the torque applied to the rotor 48 in a de-energized state is theoretically 0.

Next, in the stabilizing phase indicated in FIG. 5B, the stabilizing pulse generation circuit 691 (see FIG. 2) inputs a stabilizing pulse to the coil L1. Specifically, the stabilizing pulse generation circuit 691 turns the switch elements Tr2 and Tr3 on and the other switch elements off. As a result, current flows to the coil L1 along a path A2 traversing the switch elements Tr2 and Tr3 in a direction opposite to the path A1; this produces torque in the rotor 48 in the opposite direction as that of the driving pulse.

However, the pulse width of the stabilizing pulse is much shorter than that of the driving pulse, and thus if the rotor 48 is stopped at the stable position, the rotor 48 will remain at that stable position even if a stabilizing pulse is inputted. On the other hand, if the rotor 48 is stopped at the unstable position, the rotor 48 is returned to the original stable position, i.e., the stable position from before the driving pulse was supplied. The reason the rotor 48 is returned to the original stable position will be described later.

Next, in the charge phase indicated in FIG. 5C, the charge pulse generation circuit 693 (see FIG. 2) inputs a charge pulse, for detecting the position of the rotor 48, to the coil L1. Specifically, the charge pulse generation circuit 693 (see FIG. 2) turns the switch elements Tr1 and Tr4 on and the other switch elements off. As a result, current flows to the coil L1 along a path A3, which is the same as the path A1 illustrated in FIG. 5. The coil L1 stores magnetic energy due to the current flowing in the coil L1. However, the pulse width of the charge pulse is shorter than that of the driving pulse and the stabilizing pulse, and thus the rotor 48 is not rotationally driven by the charge pulse.

Next, in the current detection phase indicated in FIG. 5D, the charge pulse generation circuit 693 (see FIG. 2) allows the magnetic energy stored in the coil L1 to flow as current, and detects a current value thereof. Specifically, the charge pulse generation circuit 693 turns the switch elements Tr2 and Tr8 on and the other switch elements off. As a result, current flows along a path A4 traversing the switch element Tr2, the coil L1, the switch element Tr8, and the resistor R1, and a terminal voltage proportional to that current arises at the resistor R1. The terminal voltage at the resistor R1 is converted into a digital signal by the A/D converter 702 illustrated in FIG. 2. The detection/determination circuit 704 determines whether or not the rotor 48 has rotated correctly on the basis of the digital signal.

If the detection/determination circuit 704 determines that the rotation has failed, the driving pulse generation circuit 692 applies a correction pulse (not illustrated), similar to the driving pulse, to cause the rotor 48 to rotate. After the rotor 48 has been rotated 180 degrees by the phases illustrated in FIGs. 5A to 5D, in the period where the rotor 48 rotates the remaining 180 degrees, the motor control unit 69 applies the driving pulse, the stabilizing pulse, and the charge pulse so that current flows in the coil L1 in the direction opposite from that illustrated in FIGs. 5A to 5D.

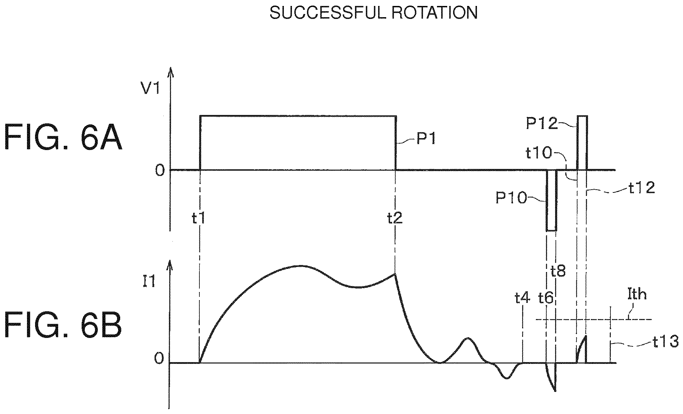

Next, waveforms at various elements when rotation is successful will be described with reference to FIGs. 6A and 6B. FIG. 6A is a waveform diagram illustrating the coil voltage V1 applied to the coil L1 by the switch elements Tr1 to Tr4, and FIG. 6B is a waveform diagram illustrating the coil current I1.

In FIG. 6A, a driving pulse P1 (a first pulse) is outputted in a period from time t1 to t2, a stabilizing pulse P10 (a second pulse) is outputted in a period from time t6 to t8, and a charge pulse P12 (a third pulse) is outputted in a period from time t10 to t12. The driving pulse P1, the stabilizing pulse P10, and the charge pulse P12 correspond to the states illustrated in FIGs. 5A, 5B, and 5C, respectively. A period from time t12 to t13 is a measurement period for the coil current I1, and corresponds to the state illustrated in FIG. 5D.

When the output of the driving pulse P1 is started at time t1, the coil current I1 gradually increases, as indicated in FIG. 6B. When the output of the driving pulse P1 then ends at time t2, the coil current I1 is ringing thereafter. This is because the rotor 48 vibrates while being dampened around the stable position. The ringing of the coil current I1 ends by time t4.

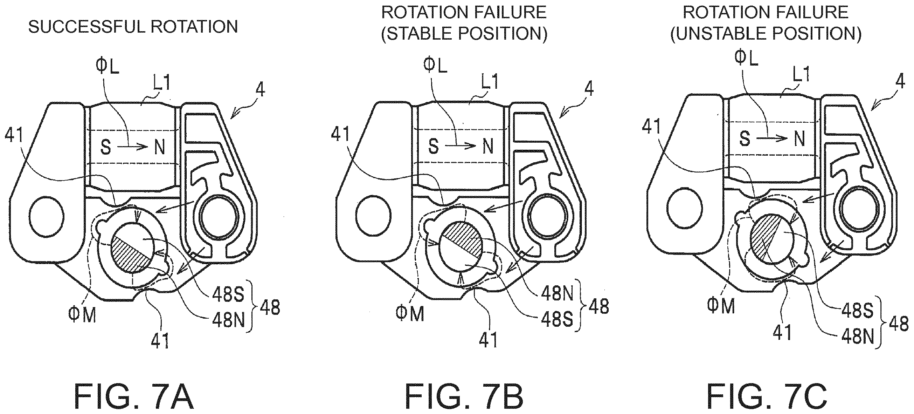

Next, FIG. 7A is a schematic diagram illustrating the state of magnetic fluxes in the stepping motor 4 when the charge pulse P12 is output at the time of a successful rotation.

A magnetic flux ΦL indicated by the solid line in FIG. 7A is a magnetic flux produced by the current flowing in the coil L1, and a magnetic flux ΦM indicated by the broken line is a magnetic flux produced by the magnet in the rotor 48. As described above, the positions where the recesses 41 are formed are positions where magnetic saturation arises with ease, but the magnetic fluxes ΦL and ΦM flow in opposite directions and thus cancel each other out, which reduces the influence of the magnetic saturation.

When the influence of the magnetic saturation is reduced, the inductance of the coil L1 takes on a relatively high value. Accordingly, as indicated in FIG. 6B, the coil current I1 when the charge pulse P12 is supplied (time t10 to t12) and at the time of current detection (time t12 to t13) takes on a relatively low value, and is less than or equal to a prescribed threshold Ith. If a peak value of the coil current I1 is less than or equal to the threshold Ith at the time of current detection (time t12 to t13), the detection/determination circuit 704 (see FIG. 2) determines that the rotation is successful.

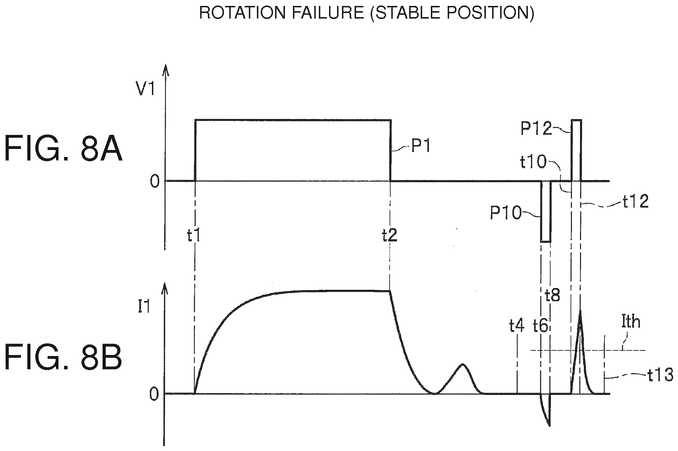

Next, waveforms at various elements when rotation fails will be described with reference to FIGs. 8A and 8B. FIGs. 8A and 8B are waveform diagrams corresponding to FIGs. 6A and 6B, but for when rotation fails. Note that FIGs. 8A and 8B assume that the rotor 48 has stopped at the stable position.

FIG. 7B is a schematic diagram illustrating the state of magnetic fluxes in the stepping motor 4 when the charge pulse P12 is outputted at the time of rotation failure (with the rotor 48 stopped at the stable position). In the state illustrated here, the magnetic flux ΦM produced by the rotor 48 and the magnetic flux ΦL produced by the coil L1 are flowing in the same direction at the positions where the recesses 41 are formed, which increases the influence of magnetic saturation.

When the influence of the magnetic saturation increases, the inductance of the coil L1 takes on a relatively low value. Accordingly, the coil current I1 when the charge pulse P12 is supplied (time t10 to t12) and at the time of current detection (time t12 to t13) takes on a relatively high value, and is greater than the threshold Ith, as illustrated in FIG. 8B. If the peak value of the coil current I1 is greater than the threshold Ith at the time of current detection (time t12 to t13), the detection/determination circuit 704 (see FIG. 2) determines that the rotation has failed.

FIG. 7C is a schematic diagram illustrating the state of magnetic fluxes in the stepping motor 4 when the charge pulse P12 is outputted at the time of a rotation failure (with the rotor 48 stopped at the unstable position). In the state illustrated here, the rotor 48 is in a position rotated 90 degrees from the stable position (see FIGs. 7A and 7B). In FIG. 7C, the magnetic fluxes ΦL and ΦM are flowing in opposite directions at the positions where the recesses 41 are formed and thus cancel each other out, which reduces the influence of the magnetic saturation.

As a result, the waveforms of the coil voltage V1 and the coil current I1 are waveforms resembling the waveforms when rotation in successful (see FIGs. 6A and 6B), and there is an increased likelihood that the peak value of the coil current I1 will be less than or equal to the threshold Ith at the time of current detection (time t12 to t13). If the peak value of the coil current I1 becomes less than or equal to the threshold Ith, the detection/determination circuit 704 erroneously determines that "rotation has succeeded" despite the fact that rotation has failed. Accordingly, in the present embodiment, the stabilizing phase (see FIG. 5B) is carried out in order to eliminate, to the greatest extent possible, a state where the rotor 48 stops in the unstable position when rotation has failed, i.e., in the state illustrated in FIG. 7C, and change that state to the state illustrated in FIG. 7B.

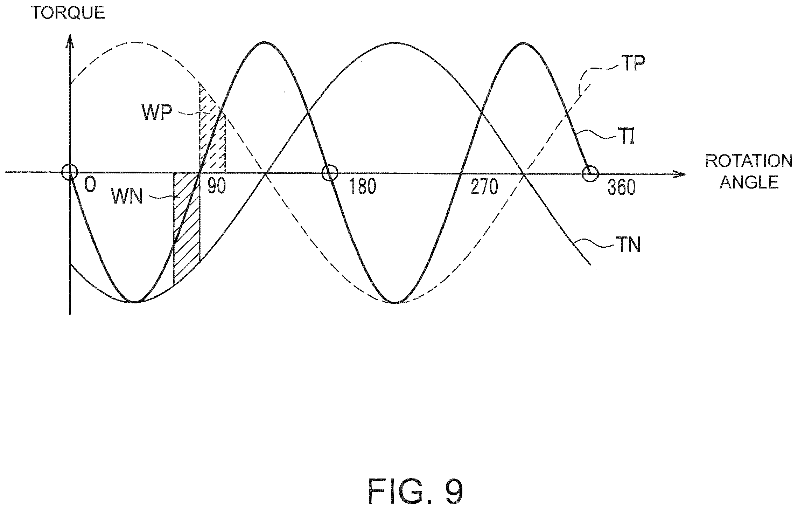

When the rotor 48 is stopped at the unstable position as indicated in FIG. 7C and the rotor 48 is to be moved to a stable position, it is conceivable to move the rotor 48 to the stable position indicated in FIG. 7A, i.e., to the stable position for when rotation is successful. However, in the present embodiment, the rotor 48 is moved to the position indicated in FIG. 7B. The reason for this will be described next with reference to FIG. 9.

FIG. 9 is a graph illustrating torque characteristics of the stepping motor 4.

In FIG. 9, the horizontal axis represents the rotation angle of the rotor 48, and the vertical axis represents torque. An index torque TI is a holding torque acting on the rotor 48 in the de-energized state, in which no current is flowing in the coil L1. A rotation angle where the index torque TI is "0" and the slope of the index torque TI has a negative value is a stable position of the rotor 48. In other words, the points of 0 degrees, 180 degrees, and 360 degrees indicated by circles in the graph are stable positions of the rotor 48.

Rotation angles where the index torque TI is "0" and the slope of the index torque TI has a positive value, i.e., rotation angles of 90 degrees and 270 degrees, are unstable positions where the rotor 48 is highly likely to stop. A positive-polarity torque TP is torque produced by the coil L1 by a positive-polarity pulse, i.e., by a pulse having the same polarity as the driving pulse. A negative-polarity torque TN is torque produced by the coil L1 by an opposite-polarity pulse, i.e., a pulse having a polarity opposite from that of the driving pulse.

An energy amount WP, obtained from the positive-polarity pulse when the rotor 48 is moved a prescribed angle from the 90-degree rotation angle by the positive-polarity pulse, is indicated by the broken line hatching in FIG. 9. In other words, the energy amount WP is the result of integrating the positive-polarity torque TP with the rotation angle. An energy amount WN, obtained from the opposite-polarity pulse when the rotor 48 is moved a prescribed angle in the opposite direction from the 90-degree rotation angle by the opposite-polarity pulse, is indicated by the solid line hatching. In other words, the energy amount WN is the result of integrating the negative-polarity torque TN with the rotation angle.

As illustrated in FIG. 9, the energy amount WN obtained from the opposite-polarity pulse is greater than the energy amount WP obtained from the positive-polarity pulse.

For reasons such as those given above, in the present embodiment, the opposite-polarity pulse is employed as the stabilizing pulse, which reduces the amount of power consumed.

Returning to FIGs. 6A and 6B, the length of the driving pulse P1, i.e., the period from time t1 to t2, is preferably set to 3 to 6 milliseconds. The reason for this is that a length in this range is generally considered necessary and sufficient for driving the rotor 48 180 degrees. Additionally, the period from when the driving pulse P1 ends to when the stabilizing pulse P10 starts, i.e., the period from time t2 to t6, is preferably in the range of from 3.0 to 900 milliseconds, and further preferably in the range of from 8.0 to 12.0 milliseconds. These periods are set to greater than or equal to 3.0 milliseconds because there are cases where the ringing period of the coil current I1 (from time t2 to t4) is approximately 3.0 milliseconds. Additionally, these periods are set to less than or equal to 900 milliseconds because particularly when using the stepping motor 4 for the second hand, it is preferable that a single instance of driving occur within one second, and that the series of phases end within one second.

Additionally, a width of the stabilizing pulse P10 (time t6 to t8) is preferably in a range of from greater than or equal to 0.01 millisecond to less than or equal to 1 millisecond, and more preferably in a range of from greater than or equal to 0.1 millisecond to less than or equal to 0.2 millisecond. In terms of a relative relationship with the width of the driving pulse P1 (time t1 to t2), the width of the stabilizing pulse P10 is preferably in a range of 1/3 to 1/600 the width of the driving pulse P1, and more preferably in a range from 1/15 to 1/60. These numerical values are selected because it is difficult to move the rotor 48 from the unstable position to the stable position if the stabilizing pulse P10 is too short, whereas the rotor 48 in the stable position will move if the stabilizing pulse P10 is too long. The stabilizing pulse P10 being too long also leads to increased power consumption. Additionally, the period from when the stabilizing pulse P10 ends to when the charge pulse P12 starts, i.e., the period from time t8 to t10, is preferably in the range of from 3.0 to 900 milliseconds, and further preferably in the range of from 8.0 to 12.0 milliseconds. These numerical values are selected for the same reasons as the period from time t2 to t6 described above.

Additionally, a width of the charge pulse P12 (time t10 to t12) is preferably in a range from greater than or equal to 0.01 millisecond to less than or equal to 1 millisecond, and more preferably in a range from greater than or equal to 0.05 millisecond to less than or equal to 0.1 millisecond. In terms of a relative relationship with the width of the driving pulse P1 (time t1 to t2), the width of the charge pulse P12 is preferably in a range of 1/3 to 1/600 the width of the driving pulse, and more preferably in a range from 1/30 to 1/120. The reasoning behind these numerical values is that the accuracy of the rotation detection will worsen if the charge pulse P12 is too short, whereas the rotor 48 will move if the charge pulse P12 is too long.

The electronic timepiece 1 according to the present embodiment as described thus far includes a rotation control apparatus (11) that controls rotation of a rotor (48) of a motor (4), the motor (4) including the rotor (48), which includes a magnet, and a stator including a coil (L1) for rotating the rotor (48), the apparatus including: a motor control unit (69) including a function (692) of supplying to the coil (L1) a first pulse (P1) for rotating the rotor (48), a function (691) of supplying to the coil (L1) a second pulse (P10) that is shorter than the first pulse (P1) and has the opposite polarity from the first pulse (P1), and a function (693) of supplying to the coil (L1) a third pulse (P12) that is shorter than the first pulse (P1) and has the same polarity as the first pulse (P1); and a determination unit (70) that determines whether or not the rotor (48) has been rotated by the first pulse (P1) on the basis of a current flowing in the coil (L1) when the third pulse (P12) is supplied.

According to another aspect, the motor control unit (69) includes a function (692) of supplying to a coil (L1) a first pulse (P1) for rotating a rotor (48), a function (691) of supplying to the coil (L1) a second pulse (P10) that has the opposite polarity from the first pulse (P1) so as to stop the rotor (48) at a stable position where the rotor (48) is magnetically stable, and a function (693) of supplying to the coil (L1) a third pulse (P12) that is shorter than the first pulse (P1) and has the same polarity as the first pulse (P1).

The electronic timepiece (1) includes: the above-described rotation control apparatus (11); a display unit (2, 3); a timing unit (613) that measures time; and a control unit (6) that causes the time measured by the timing unit (613) to be displayed on the display unit (2, 3).

Thus according to the present embodiment, even when the rotor (48) is in an unstable position the rotor (48) is more likely to be moved to the stable position by the second pulse (P10). The rotation of the rotor (48) can be accurately detected as a result. Although the hands 2 may stop if there is an error in detecting the rotation of the rotor (48), the accurate rotation detection according to the present embodiment also makes it possible to suppress a situation in which the hands stop. Furthermore, it becomes more likely that the rotor (48) can be stopped at the stable position when the series of phases has ended, which makes it possible to suppress variations in the step angles of the hands 2. Furthermore, the second pulse (P10) has the opposite polarity from the first pulse (P1), and thus the amount of power consumed due to the second pulse (P10) can be suppressed.

Additionally, the motor control unit (69) outputs the third pulse (P12) to the coil (L1) for a prescribed period, and determines whether or not the rotor (48) has rotated on the basis of a response of the current flowing in the coil (L1) after the prescribed period has ended. This also makes it possible to suppress power consumption due to the third pulse (P12).

Additionally, the rotor (48) has a plurality of stable positions, within a range of a single rotation, where the rotor (48) magnetically stabilizes and stops, and if the rotor (48) has stopped at a position that is not a stable position, the second pulse (P10) moves the rotor (48) to one of the stable positions. Accordingly, the rotor (48) can be moved to the stable position appropriately.

Furthermore, the second pulse (P10) is a rectangular wave having a length greater than or equal to 0.01 millisecond and less than or equal to 1 millisecond. Accordingly, the rotor (48) in an unstable position can be moved to a stable position, and a situation where the rotor (48) in the stable position moves can be suppressed.

### <Embodiment 2>

An electronic timepiece according to Embodiment 2 will be described next. In the following descriptions, elements corresponding to those illustrated in FIGs. 1 to 9 are given the same reference signs, and descriptions thereof may be omitted.

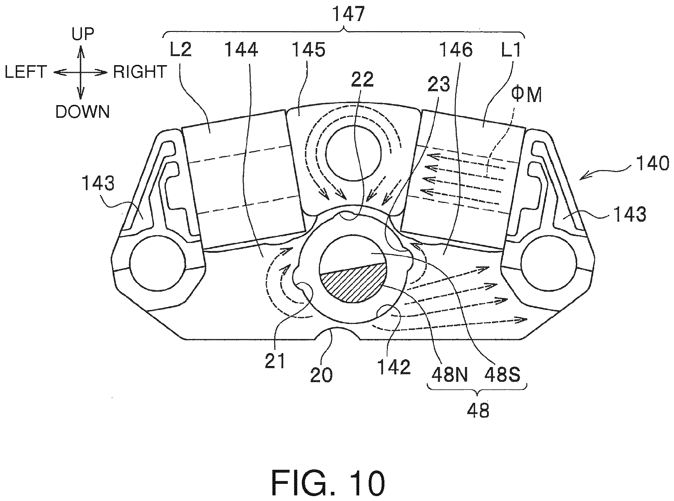

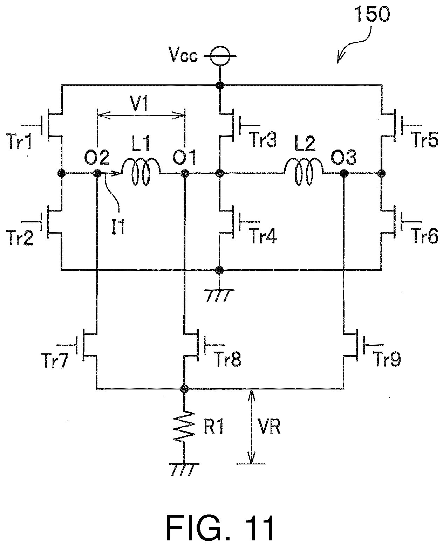

Although the overall configuration of the electronic timepiece according to the present embodiment is the same as that according to Embodiment 1 (see FIGs. 1 and 2), the present embodiment differs in that stepping motors 140 (motors), one of which is illustrated in FIG. 10, and a driving circuit 150, illustrated in FIG. 11, are provided instead of the stepping motors 4 and the driving circuit 5 according to Embodiment 1.

FIG. 10 is a plan view of the stepping motor 140 applied in the present embodiment.

The stepping motor 140 is a dual core-type motor, and includes a stator 147 and a rotor 48. The configuration of the rotor 48 is the same as that described in Embodiment 1 (see FIG. 3). Note that in the present embodiment, the rotor 48 can rotate counter-clockwise or clockwise at a prescribed step angle in response to a driving pulse being applied to a coil L1 (a first coil) and a coil L2 (a second coil), which will be described later. The step angle is 180 degrees in the present embodiment.

The stator 147 includes a substantially rectangular center yoke 145, a pair of side yokes 144 and 146 disposed below the center yoke 145, and the coils L1 and L2. The side yokes 144 and 146 are provided with substantially bilateral symmetry so as to surround the rotor 48. The coils L1 (the first coil) and L2 (the second coil) are inserted between an upper end portion of the center yoke 145 and the side yokes 144 and 146, respectively. The coils L1 and L2 are connected to the driving circuit 150, which will be described later, via a pair of terminal blocks 143.

A substantially circular opening 142 is formed in the stator 147, at a point where a lower end of the center yoke 145 intersects with the pair of side yokes 144 and 146, and the rotor 48 is disposed in the opening 142. When magnetized, three magnetic poles are produced in the stator 147 along an outer circumference of the rotor 48, one near the center yoke 145, one near the side yoke 144, and one near the side yoke 146. When driving pulses are applied to the coils L1 and L2, the three magnetic poles of the stator 147 switch polarities. Meanwhile, an arc-shaped recess 20 is formed below the opening 142 at the location where the side yokes 144 and 146 connect.

One end of the coil L1 is magnetically linked to the center yoke 145, and the other end of the coil L1 is magnetically linked to a free end of the side yoke 146. Likewise, one end of the coil L2 is magnetically linked to the center yoke 145, and the other end of the coil L2 is magnetically linked to a free end of the side yoke 144.

In the present embodiment, the driving pulse generating circuit 692 (see FIG. 2) applies driving pulses to the coils L1 and L2. Magnetic fluxes arise in the coils L1 and L2 as a result, and the magnetic fluxes flow along the magnetic cores of the coils L1 and L2 and the stator 147 magnetically linked thereto, switching the three magnetic poles as appropriate.

Three recesses 21, 22, and 23 are formed in an inner circumferential surface of the opening 142. The recesses 21, 22, and 23 are formed in a direction tilted approximately 10 degrees counter-clockwise from the direction of the center yoke 145, and in two directions perpendicular to the stated tilted direction. The rotor 48 can be kept in a static state by these recesses 21, 22, and 23. In the present embodiment, the stepping motor 140 has the highest index torque (holding torque) when the polarization direction of the rotor 48 is tilted approximately 80 degrees and approximately 260 degrees clockwise from the direction of the center yoke 145.

Accordingly, the stopped position indicated in FIG. 10, or a stopped position rotated 180 degrees from that stopped position is the stable position in the present embodiment. In FIG. 10, the magnetic flux ΦM arising in the various parts of the stator 147 when the coils L1 and L2 are in a de-energized state is indicated by broken line arrows. The vicinities of the recesses 20 and 23 are positions where the cross-section area of the side yokes 144 and 146 is the smallest (or where a minimum value appears for the cross-sectional area), and are positions where magnetic saturation arises with ease.

In the present embodiment too, the rotor 48 may stop at a position aside from a stable position, i.e., at an unstable position, for a variety of reasons. The torque characteristics in the present embodiment are the same as in Embodiment 1 (see FIG. 9). Accordingly, in the present embodiment, assuming that the stopped position indicated in FIG. 10 is 0 degrees, unstable positions where the rotor 48 is highly likely to stop are positions at 90 degrees and 270 degrees.

The magnetic flux ΦM arising when the rotor 48 has stopped at these unstable positions is not illustrated. However, the direction of the magnetic flux ΦM near the recesses 20 and 23 is the same (the direction illustrated) between the position of 0 degrees (the position indicated in FIG. 10) and the position of 270 degrees. Accordingly, when attempting position detection, the direction of the magnetic flux ΦM near the recesses 20 and 23 (or in other words, the ease at which magnetic saturation arises) is difficult to distinguish with respect to the position of 0 degrees and the position of 270 degrees. For the same reason, it is difficult to distinguish the direction with respect to the position of 180 degrees and the position of 90 degrees.

FIG. 11 is a circuit diagram illustrating the driving circuit 150 applied in the present embodiment.

The driving circuit 150 applies driving pulses to the two coils L1 and L2, and applies the stabilizing pulse and the charge pulse to the coil L1. The driving circuit 150 includes an H-bridge circuit constituted by switch elements Tr1 to Tr6 that are MOSFETs, for example. Switch elements Tr7 to Tr9 and a resistor R1 constitute a discharge circuit that discharges energy stored in the coils L1 and L2.

The power source 7 (see FIG. 1) applies a source voltage Vcc across a source terminal and a ground terminal of the driving circuit 150. Between a voltage terminal and the ground terminal, the switch elements Tr1 and Tr2 are connected in series via a connection point O2, the switch elements Tr3 and Tr4 are connected in series via a connection point O1, and the switch elements Tr5 and Tr6 are connected in series via a connection point O3. One end of the resistor R1 is connected to the ground terminal. The switch element Tr7 is connected between the connection point O2 and the other end of the resistor R1. The switch element Tr8 is connected between the connection point O1 and the other end of the resistor R1. The switch element Tr9 is connected between the connection point O3 and the other end of the resistor R1. Furthermore, the coil L1 of the stepping motor 140 is connected between the connection points O2 and O1, and the coil L2 is connected between the connection points O3 and O1.

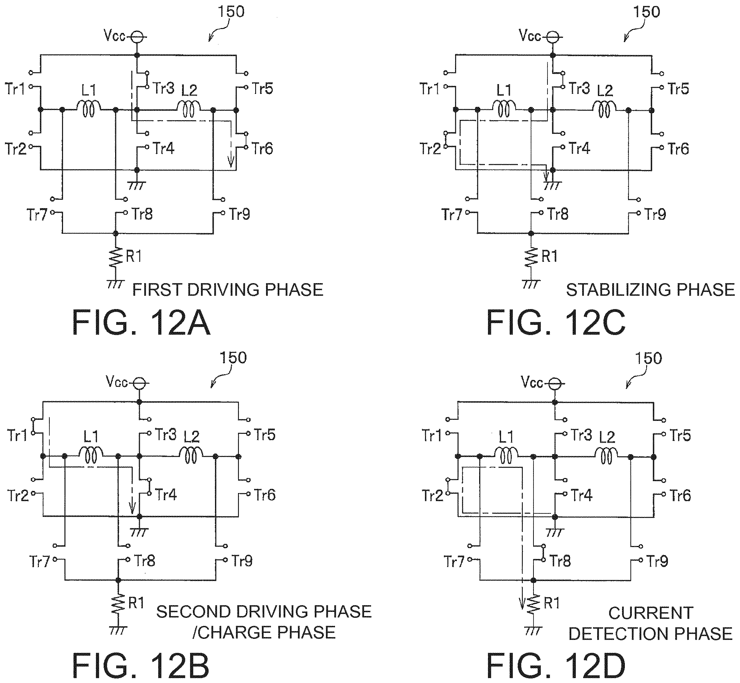

Next, operations according to the present embodiment will be described with reference to FIGs. 12A to 12D. Here, FIG. 12A is a descriptive diagram illustrating operations of the driving circuit 150 in a first driving phase; FIG. 12B is a descriptive diagram illustrating operations in a second driving phase and a charge phase; FIG. 12C is a descriptive diagram illustrating operations in a stabilizing phase; and FIG. 12D is a descriptive diagram illustrating operations in a current detection phase.

FIGs. 12A to 12D illustrate current flowing in the driving circuit 150 in a period in which the rotor 48 rotates 180 degrees from a given step angle to the next step angle. In these diagrams, the symbols for the switch elements Tr1 to Tr9 are indicated as terminal pairs. A switch element in an on state is indicated by the pair of terminals being in a strapped state, whereas a switch element in an off state is indicated by the pair of terminals being in an open state.

The first driving phase, the second driving phase, the stabilizing phase, the charge phase, and the current detection phase are executed in sequence in a period in which the rotor 48 is to rotate by 180 degrees.

First, in the first driving phase, the driving pulse generation circuit 692 turns the switch elements Tr3 and Tr6 on and turns the other switch elements off, as illustrated in FIG. 12A. As a result, current flows to the coil L2 along a path traversing the switch elements Tr3 and Tr6. In a normal state, the rotor 48 is rotationally driven approximately 90 degrees. The voltage applied to the coil L2 in the first driving phase will be called a "first driving pulse". Note that when the switch elements aside from the switch elements Tr3 and Tr6 are turned off in this manner, the coil L1 enters a high-impedance state.

Next, in the second driving phase, the driving pulse generation circuit 692 turns the switch elements Tr1 and Tr4 on and turns the other switch elements off, as illustrated in FIG. 12B. As a result, current flows to the coil L1 along a path traversing the switch elements Tr1 and Tr4. In a normal state, the rotor 48 is rotationally driven approximately 90 additional degrees (a total of 180 degrees). The voltage applied to the coil L1 in the second driving phase will be called a "second driving pulse". Note that when the switch elements aside from the switch elements Tr1 and Tr4 are turned off in this manner, the coil L2 enters a high-impedance state.

Next, in the stabilizing phase, the stabilizing pulse generation circuit 691 turns the switch elements Tr2 and Tr3 on and turns the other switch elements off, as illustrated in FIG. 12C. As a result, current flows in the coil L1 along a path traversing the switch elements Tr2 and Tr3, in the direction opposite from the second driving phase (FIG. 12B). The voltage applied to the coil L1 in the stabilizing phase will be called a "stabilizing pulse".

However, the pulse width of the stabilizing pulse is much shorter than the first and second driving pulses, and thus if the rotor 48 is stopped at the stable position, the rotor 48 will remain at that stable position even if a stabilizing pulse is inputted. On the other hand, if the rotor 48 is stopped at the unstable position, the rotor 48 is returned to the original stable position, i.e., the stable position from before the first driving pulse was supplied.

Next, in the charge phase, the charge pulse generation circuit 693 turns the switch elements Tr1 and Tr4 on for a short amount of time and turns the other switch elements off, as illustrated in FIG. 12B. The voltage applied to the coil L1 in the charge phase will be called a "charge pulse". In the charge phase too, when the switch elements aside from the switch elements Tr1 and Tr4 are turned off, the coil L2 enters a high-impedance state. As described above, the pulse width of the charge pulse is a short amount of time. Thus although the rotor 48 is not driven, the coil L1 is charged with magnetic energy.

Next, in the current detection phase, the charge pulse generation circuit 693 turns the switch elements Tr2 and Tr8 on and turns the other switch elements off, as illustrated in FIG. 12D.

As a result, due to the magnetic energy with which the coil L1 has been charged, current flows through the switch element Tr2, the coil L1, the switch element Tr8, and the resistor R1, and a terminal voltage proportional to the current value is produced at the resistor R1. The terminal voltage at the resistor R1 is converted into a digital signal by the A/D converter 702 illustrated in FIG. 2. The detection/determination circuit 704 determines whether or not the rotor 48 has successfully rotated on the basis of the terminal voltage. The principle behind this is the same as in Embodiment 1.

After the operations illustrated in FIGs. 12A to 12D have ended, the stabilizing pulse generation circuit 691, the driving pulse generation circuit 692, and the charge pulse generation circuit 693 supply current to the coils L1 and L2 in the direction opposite from that indicated in FIGs. 12A to 12D during the period in which the rotor 48 rotates the remaining 180 degrees.

In the present embodiment, the lengths of the first and second driving pulses are preferably from 3 to 6 milliseconds, like the driving pulse in Embodiment 1. Additionally, the period from when the first driving pulse ends to when the second driving pulse starts is preferably in a range of from 3.0 to 900 milliseconds. Furthermore, the period from when the second driving pulse ends to when the stabilizing pulse starts is, as in Embodiment 1, preferably in a range of from 3.0 to 900 milliseconds, and further preferably in a range of from 8.0 to 12.0 milliseconds.

Additionally, as in Embodiment 1, a width of the stabilizing pulse is preferably in a range from greater than or equal to 0.01 millisecond to less than or equal to 1 millisecond, and more preferably in a range from greater than or equal to 0.1 millisecond to less than or equal to 0.2 millisecond. Furthermore, as in Embodiment 1, the period from when the stabilizing pulse ends to when the charge pulse starts is preferably in a range of from 3.0 to 900 milliseconds, and further preferably in a range of from 8.0 to 12.0 milliseconds. Further still, as in Embodiment 1, a width of the charge pulse is preferably in a range from greater than or equal to 0.01 millisecond to less than or equal to 1 millisecond, and more preferably in a range from greater than or equal to 0.05 millisecond to less than or equal to 0.1 millisecond.

Furthermore, if the stepping motor 140 is to be applied for a second hand, a single instance of driving preferably occurs within one second. To that end, the series of phases (the first driving phase, the second driving phase, the stabilizing phase, the charge phase, and the current detection phase) are preferably completed within a range of 500 milliseconds.

According to the present embodiment as described thus far, as the coil, the motor (140) includes a first coil (L1) and a second coil (L2); the motor control unit (69) supplies the first pulse (first and second driving pulses) to the second coil (L2) and the first coil (L1) in order, supplies the second pulse (stabilizing pulse) to the first coil (L1), and supplies the third pulse (charge pulse) to the first coil (L1); and the determination unit (70) determines whether or not the rotor (48) has been rotated by the first pulse (first and second driving pulses) on the basis of a current flowing in the first coil (L1) when the third pulse (charge pulse) is supplied.

With this configuration, according to the present embodiment, the same effects as those described in Embodiment 1 can be obtained even in the dual core-type stepping motor 140. In other words, the rotation of the rotor 48 can be detected with a high level of accuracy, while suppressing power consumption.

### <Embodiment 3>

An electronic timepiece according to Embodiment 3 will be described next. In the following descriptions, elements corresponding to those illustrated in FIGs. 1 to 12D are given the same reference signs, and descriptions thereof may be omitted.

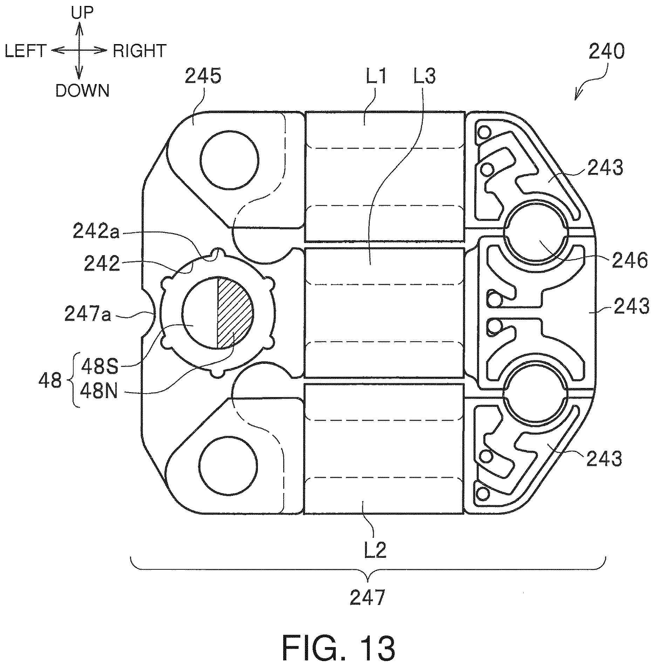

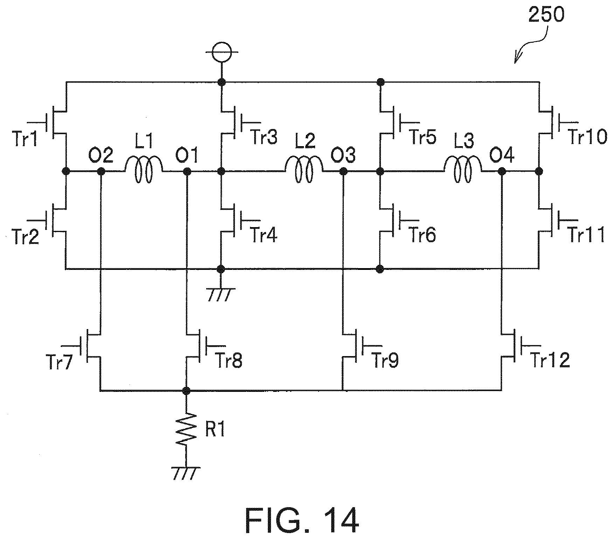

Although the overall configuration of the electronic timepiece according to the present embodiment is the same as that according to Embodiment 1 (FIGs. 1 and 2), the present embodiment differs in that stepping motors 240 (motors), one of which is illustrated in FIG. 13, and a driving circuit 250, illustrated in FIG. 14, are provided instead of the stepping motors 4 and the driving circuit 5 according to Embodiment 1.

FIG. 13 is a plan view of the stepping motor 240 applied in the present embodiment.

The stepping motor 240 is a triple core-type motor, and includes a stator 247 and a rotor 48. The configuration of the rotor 48 is the same as that described in Embodiment 1 (see FIG. 3). In the present embodiment, the rotor 48 can rotate counter-clockwise or clockwise at a prescribed step angle in response to a driving pulse being applied to a coil L1 (a first coil), a coil L2 (a second coil), and a coil L3 (a third coil), which will be described later. The step angle is 60 degrees in the present embodiment.

The stator 247 includes a substantially E-shaped first yoke 245 and a substantially I-shaped second yoke 246. A plurality of terminal blocks 243 are mounted to a front surface of the second yoke 246. The coils L1, L2, and L3 are inserted between the first and second yokes 245 and 246. The coils L1, L2, and L3 are magnetically linked to the first and second yokes 245 and 246, and are connected to the driving circuit 250, which will be described later, via the terminal blocks 243.

A substantially circular opening 242 is formed in a central area of the first yoke 245, and the rotor 48 is disposed in the opening 242. When magnetized, three magnetic poles are produced in the stator 247 around the opening 242. When driving pulses are applied to the coils L1, L2, and L3, the three magnetic poles of the stator 247 switch polarities. Additionally, an arc-shaped recess 247a is formed in the center of a left side surface of the first yoke 245.

Recesses 242a are formed in an inner circumferential surface of the opening 242 at six equal intervals in the rotation direction. The rotor 48 can be kept in a static state by these recesses 242a. In the present embodiment, the stepping motor 240 has the highest index torque (holding torque) in a state where the polarization direction of the rotor 48 opposes the recesses 242a. As such, in a de-energized state, that is, when no driving pulse is being applied, the stopped position illustrated in FIG. 13 or stopped positions respectively rotated 60 degrees, 120 degrees, 180 degrees, 240 degrees, and 300 degrees from that stopped position are stable positions where the rotor 48 magnetically stabilizes and stops. The intermediate positions between these stable positions, i.e., positions rotated 30 degrees, 90 degrees, 150 degrees, 210 degrees, 270 degrees, and 330 degrees from the stopped position indicated in FIG. 13, are representative unstable positions.

FIG. 14 is a circuit diagram illustrating the driving circuit 250 applied in the present embodiment.

The driving circuit 250 applies the driving pulse, the stabilizing pulse, and the charge pulse to the three coils L1, L2, and L3. The driving circuit 250 includes an H-bridge circuit constituted by switch elements Tr1 to Tr6, Tr10, and Tr11 that are MOSFETs. Meanwhile, switch elements Tr7 to Tr9 and Tr12 and a resistor R1 constitute a discharge circuit that discharges energy stored in the coils L1 and L2.

The power source 7 (see FIG. 1) applies a source voltage Vcc across a source terminal and a ground terminal of the driving circuit 250. Between a voltage terminal and the ground terminal, the switch elements Tr1 and Tr2 are connected in series via a connection point O2, and the switch elements Tr3 and Tr4 are connected in series via a connection point O1. Likewise, the switch elements Tr5 and Tr6 are connected in series via a connection point O3, and the switch elements Tr10 and Tr11 are connected in series via a connection point O4.

Additionally, one end of the resistor R1 is connected to the ground terminal. The switch element Tr7 is connected between the connection point O2 and the other end of the resistor R1. The switch element Tr8 is connected between the connection point O1 and the other end of the resistor R1. Likewise, the switch element Tr9 is connected between the connection point O3 and the other end of the resistor R1. The switch element Tr12 is connected between the connection point O4 and the other end of the resistor R1. Furthermore, the coil L1 of the stepping motor 240 is connected between the connection points O2 and O1, the coil L2 is connected between the connection points O3 and O1, and the coil L3 is connected between the connection points O3 and O4.

In the present embodiment, the driving pulse generation circuit 692 (see FIG. 2) turns the switch elements Tr1 to Tr6, Tr10, and Tr11 illustrated in FIG. 14 on and off. As a result, driving pulses are supplied to the coils L1, L2, and L3 to rotationally drive the rotor 48.

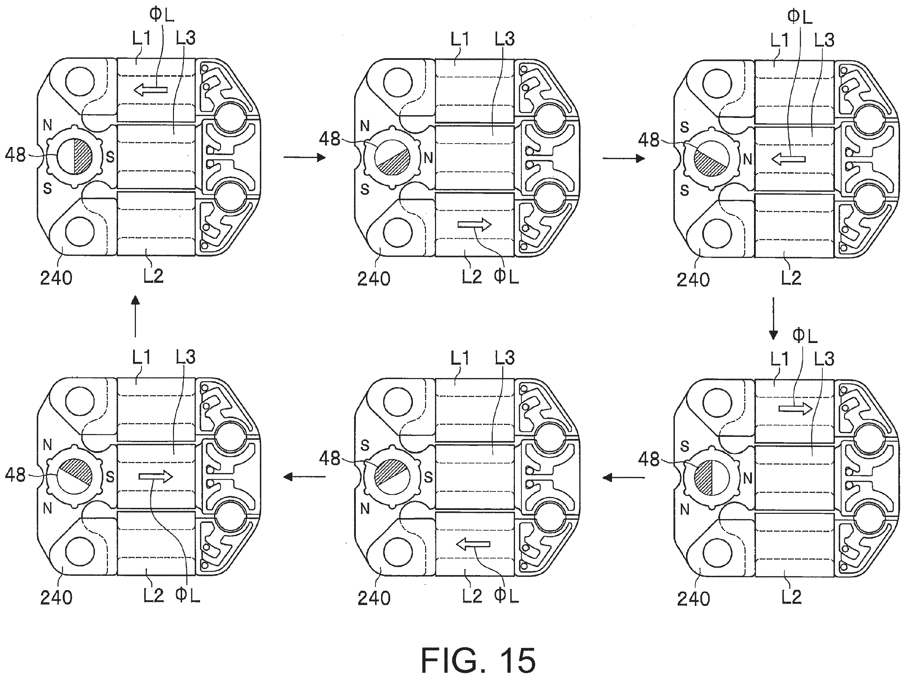

FIG. 15 is a descriptive diagram illustrating operations in the present embodiment, and illustrates a state of the rotor 48 when it is assumed the rotor 48 has rotated correctly. The white arrows added to the coils L1, L2, and L3 at the respective stopped positions in FIG. 15 indicate the magnetic flux ΦL produced by the driving pulse.

The letters "N" and "S" around the rotor 48 indicate magnetic poles induced by the magnetic flux ΦL, i.e., magnetic poles induced when the driving pulse is applied to one of the coils L1, L2, and L3. When the rotor 48 is rotated correctly by the magnetic flux ΦL and the driving pulse is then turned off, the coils L1, L2, and L3 enter a de-energized state. In the de-energized state, the magnetic poles are induced by the rotor 48 in the periphery of the rotor 48. The induced magnetic poles are the same as the magnetic poles induced earlier by the application of the driving pulse, i.e., the magnetic poles illustrated in FIG. 15.

After applying the driving pulse to one of the coils L1, L2, and L3, the motor control unit 69 applies a stabilizing pulse of the opposite polarity to the same coil. As a result, if the rotor 48 is stopped at an unstable position, the rotor 48 moves to the stable position in the counter-clockwise direction. In each state illustrated, when an N pole or an S pole arises in two locations, a divided magnetic flux flows in the coils corresponding to those locations, which reduces the magnetic flux density. On the other hand, when an N pole or an S pole arises in only one location, substantially the entire magnetic flux flows in the corresponding coil, which increases the magnetic flux density. In other words, the magnetic flux density in that coil is highest among the coils L1, L2, and L3.

Accordingly, in the present embodiment, the charge pulse generation circuit 693 (see FIG. 2) supplies the charge pulse to the coil having the maximum magnetic flux density when it is assumed that the rotor 48 has rotated correctly. In other words, a charge pulse of the same direction as the driving pulse is supplied to the coil L1, L2, or L3 to which the driving pulse was supplied immediately before.

As a result, if the rotor 48 has rotated successfully, the charge pulse is supplied to the coil, among the three coils L1, L2, and L3, in which the density of the magnetic flux produced by the rotor 48 is maximum. This increases the coil inductance and reduces the current flowing in that coil. On the other hand, if the rotation has failed, the charge pulse is supplied to the coil in which the density of the magnetic flux produced by the rotor 48 is low. This reduces the coil inductance and increases the current flowing in that coil.

In the current detection phase following thereafter, the energy stored in the coil to which the charge pulse has been applied is discharged via the resistor R1. The detection/determination circuit 704 (see FIG. 2) determines whether the rotation of the rotor 48 has succeeded or failed on the basis of whether or not the coil current at that time is greater than or equal to the threshold Ith. In this manner, the rotor 48 rotates only 60 degrees when a single series of phases is completed. Thus the rotor 48 makes a single rotation upon the phases based on the rotation angle being repeated for six sets, while switching the coils L1, L2, and L3 to which the pulses are applied and switching the pulse polarities according to the order illustrated in FIG. 15.

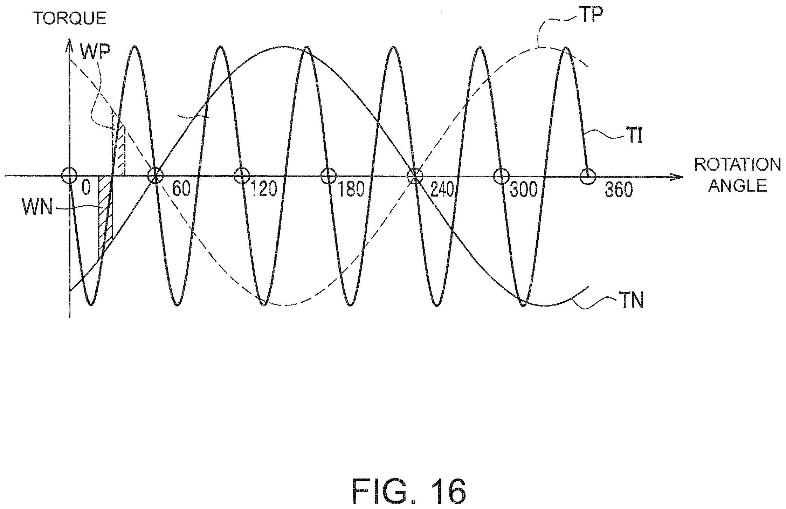

FIG. 16 is a graph illustrating torque characteristics of the stepping motor 240 according to the present embodiment.

In FIG. 16, the horizontal axis represents the rotation angle of the rotor 48, and the vertical axis represents torque. An index torque TI is a holding torque acting on the rotor 48 in the de-energized state of the coils L1, L2, and L3. A positive-polarity torque TP is torque produced by the coil L1 by a pulse having the same polarity as the driving pulse. A negative-polarity torque TN is torque produced by the coil L1 by a pulse having a polarity opposite from that of the driving pulse.

The rotation angles corresponding to stable positions, i.e., the points of 0 degrees, 60 degrees, 120 degrees, 180 degrees, 240 degrees, 300 degrees, and 360 degrees, are indicated by circles in the graph. Rotation angles where the index torque TI is "0" and the slope of the index torque TI has a positive value, i.e., rotation angles of 30 degrees, 90 degrees, 150 degrees, 210 degrees, 270 degrees, and 330 degrees, are unstable positions where the rotor 48 is highly likely to stop.

An energy amount WP, obtained from the positive-polarity pulse when the rotor 48 is moved a prescribed angle from the 30-degree rotation angle by the positive-polarity pulse, is indicated by the broken line hatching in FIG. 16. In other words, the energy amount WP is the result of integrating the positive-polarity torque TP with the rotation angle. An energy amount WN, obtained from the opposite-polarity pulse when the rotor 48 is moved a prescribed angle in the opposite direction from the 30-degree rotation angle by the opposite-polarity pulse, is indicated by the solid line hatching in FIG. 16. In other words, the energy amount WN is the result of integrating the negative-polarity torque TN with the rotation angle.

In the present embodiment too, the energy amount WN obtained from the opposite-polarity pulse is greater than the energy amount WP obtained from the positive-polarity pulse, as in Embodiments 1 and 2 (see FIG. 9). Accordingly, in the present embodiment too, the opposite-polarity pulse is employed as the stabilizing pulse, which reduces the amount of power consumed.

In the present embodiment, the length of the driving pulse is preferably from 3 to 6 milliseconds, like the driving pulse in Embodiment 1. Additionally, the period from when the driving pulse ends to when the stabilizing pulse starts is preferably in a range of from 3.0 to 900 milliseconds. Additionally, a width of the stabilizing pulse is preferably in a range from greater than or equal to 0.01 millisecond to less than or equal to 1 millisecond, and more preferably in a range from greater than or equal to 0.1 millisecond to less than or equal to 0.2 millisecond. Furthermore, as in Embodiment 1, the period from when the stabilizing pulse ends to when the charge pulse starts is preferably in a range of from 3.0 to 900 milliseconds, and further preferably in a range of from 8.0 to 12.0 milliseconds. Further still, as in Embodiment 1, a width of the charge pulse is preferably in a range from greater than or equal to 0.01 millisecond to less than or equal to 1 millisecond, and more preferably in a range from greater than or equal to 0.05 millisecond to less than or equal to 0.1 millisecond.

According to the present embodiment as described thus far, as the coil, the motor (240) includes a first coil (L1), a second coil (L2), and a third coil (L3); and the motor control unit (69) supplies the second pulse (stabilizing pulse) to the first coil (L1), the second coil (L2), and the third coil (L3) in a prescribed order during the rotation of the rotor (48).

With this configuration, according to the present embodiment, the same effects as those described in Embodiments 1 and 2 can be obtained even in the triple core-type stepping motor 240. In other words, the rotation of the rotor 48 can be detected with a high level of accuracy, while suppressing power consumption.

The present invention is not intended to be limited to the embodiments described above, and many other variations can be made thereon. The embodiments described above are merely examples given to facilitate understanding of the present invention, and the present invention is not limited to a configuration including all of the elements described above. Additionally, configurations in one embodiment can be partially replaced with configurations from another embodiment, and likewise configurations from one embodiment can be added to the configurations of another embodiment. Furthermore, some configurations in a given embodiment can be omitted, or other configurations can be added and replace those configurations. The control lines, information lines, and so on indicated in the drawings are those considered necessary for descriptive purposes, and do not necessarily represent all control lines, information lines, and so on necessary for implementation as a product. In practice, it can be assumed that almost all of the elements are connected to each other. The following are some possible variations that can be made on the embodiments described above.

The foregoing embodiments describe examples in which single-core, dual-core, or triple-core stepping motors 4, 140, or 240 are applied as specific examples of a "motor". However, a stepping motor having a greater number of coils may be applied instead. The present invention may also be applied in a motor aside from a stepping motor.

Additionally, the foregoing embodiments describe the microcomputer 6 as being installed in the electronic timepiece 1. However, the microcomputer 6 may be applied in motor control for a variety of apparatuses aside from the electronic timepiece 1.

The foregoing embodiments may be applied in the detection of skew in a hand caused by drop impacts, static electricity, or the like.

In other words, after an instance of detecting rotation through the output of a stabilizing pulse and the output of a charge pulse, carrying out the same rotation detection multiple times before the next driving pulse is supplied makes it possible to determine whether or not the hand has become skewed. Thus in the case where skew in the hand has been detected, that skew can be corrected by detecting the position of the hand and returning the hand to its normal position. This makes it possible to install second, minute, and hour hands having high weights and unbalanced moments, which could not be installed conventionally.

It will be apparent to those skilled in the art that various modifications and variations can be made in the present invention without departing from the spirit or scope of the invention. Thus, it is intended that the present invention cover modifications and variations that come within the scope of the appended claims and their equivalents. In particular, it is explicitly contemplated that any part or whole of any two or more of the embodiments and their modifications described above can be combined and regarded within the scope of the present invention.

## Claims

1. A rotation control apparatus (11) for a stepping motor (4, 4a, 4b, 4c, 4d), comprising a microcomputer (6) and a rotor (48), **characterized in that**:
the microcomputer comprising:
a motor control unit (69) that causes a first pulse for rotating the rotor of the stepping motor to be supplied to the stepping motor; the motor control unit subsequently causing a second pulse that is shorter than the first pulse and that has an opposite polarity from the first pulse to be supplied to the stepping motor so as to stabilize the rotor, and thereafter causing a third pulse that is shorter than the first pulse and that has the same polarity as the first pulse to be supplied to the stepping motor so as to induce a current in the stepping motor for detecting whether or not the rotor has successfully rotated to a target position; and
a determination unit (70) that receives a signal representing the current induced in the stepping motor so as to determine whether or not the rotor has successfully rotated to the target position.

2. The rotation control apparatus according to claim 1, **characterized in that**
the motor control unit causes the third pulse to be supplied to a coil (L1, L2, L3) of the stepping motor for a prescribed period, and
the determination unit determines whether or not the rotor has successfully rotated on the basis of a response of a current flowing in the coil after the prescribed period for the third pulse has ended.

3. The rotation control apparatus according to claim 2, **characterized in that**
within a range of a single rotation, the rotor has a plurality of stable rotational positions at which the rotor stops in a magnetically stable state, and
the second pulse moves the rotor to one of the stable positions if the rotor has stopped at a position other than any of the stable positions in response to the first pulse.

4. The rotation control apparatus according to claim 2 or 3, **characterized in that**
the second pulse is a rectangular pulse having a period longer than or equal to 0.01 millisecond and less than or equal to 1 millisecond.

5. The rotation control apparatus of any one of claim 1 to 4, **characterized in that**
the stepping motor includes a first coil and a second coil; the motor control unit causes the first pulse to be supplied to the second coil and thereafter causes a fourth pulse for further rotating the rotor towards the target position to the first coil before causing the second pulse for stabilizing the rotor to be supplied; and the second pulse is supplied to the first coil and the third pulse is supplied to the first coil, and
the determination unit determines whether or not the rotor has been rotated by the first pulse and the fourth pulse to the target position on the basis of a response of current flowing in the first coil after the third pulse is supplied.

6. The rotation control apparatus of any one of claim 1 to 5, **characterized in that**
the stepping motor includes a first coil, a second coil, and a third coil; and
the motor control unit causes the second pulse to the first coil, the second coil, and the third coil in a prescribed order during each stepping rotation of the rotor.

7. An electronic timepiece (1) comprising a display unit (2a, 2b, 2c, 2d), a timing unit (611, 612, 613, 65) that keeps time, and a control unit (61) that causes the time measured by the timing unit to be displayed on the display unit, **characterized by** comprising the rotation control apparatus of any one of claim 1 to 6.

8. A rotation control method, used in a stepping motor (4, 4a, 4b, 4c, 4d) that includes a rotor (48) having a magnet (48S, 48N) and a stator (47, 147, 247) having a coil (L1, L2, L3) for rotating the rotor, of controlling rotation of the rotor, the method **characterized by** comprising:
supplying to the coil a first pulse for rotating the rotor;
thereafter, supplying to the coil a second pulse that is shorter than the first pulse and that has an opposite polarity from the first pulse;
thereafter, supplying to the coil a third pulse that is shorter than the first pulse and has the same polarity as the first pulse; and
determining whether or not the rotor has been rotated by the first pulse to a target position on the basis of a current that flows in the coil in response to the third pulse.
